# FASCICULE DE BREVET EUROPEEN

(11) **EP 0 736 149 B1**
(45) Date de publication et mention de la délivrance du brevet: **10.03.1999**
(21) Numéro de dépôt: 95932801.4
(22) Date de dépôt: 28.09.1995
(51) Int. Cl.: F16F 15/139, F16F 15/129

(54) **DISPOSITIF AMORTISSEUR DE TORSION**
ROTATIONSSCHWINGUNGSDÄMPFER
TORSION DAMPING DEVICE

(30) Priorité: 28.09.1994 FR 9411572
(43) Date de publication de la demande: 09.10.1996
(73) Titulaire: VALEO, 75017 Paris (FR)
(72) Inventeur: MOKDAD, Ayman, F-93400 Saint-Ouen (FR); GRIECO, Giovanni, F-93400 Saint-Ouens (FR)
(74) Mandataire: Gamonal, Didier
(86) Numéro de dépôt international: FR9501249
(87) Numéro de publication internationale: WO9610141

(56) Documents cités:
- AU-B- 554 758
- DE-B- 2 430 160
- FR-A- 2 628 807

## Description

L'invention se rapporte à un dispositif amortisseur de torsion, notamment un double volant amortisseur formant dispositif de transmission de couple pour véhicule automobile, du type comportant deux masses coaxiales montées mobiles l'une par rapport à l'autre à l'encontre de moyens élastiques et de moyens de frottement.

On connait de par le document WO95/28578 constituant un état de la technique publié après le dépôt de la présente demande un dispositif amortisseur de torsion comportant une première masse destinée à être fixée à un arbre menant, tel que par exemple le vilebrequin du moteur d'un véhicule automobile, et une deuxième masse formant un plateau de réaction pour un embrayage à friction et, où les moyens de frottement sont ménagés dans une pièce porteuse de rigidification qui s'étend entre la première masse et la seconde masse. A cet effet, la pièce porteuse comporte un rebord axial muni de dents repliables qui sert à loger une rondelle de frottement et une rondelle d'engrènement sollicitées par exemple par une rondelle Belleville, les dents étant repliées à l'aide d'une matrice d'outils une fois les rondelles mises en place. On peut songer à amincir les dents par rapport au rebord et à les prolonger dans le rebord par des découpes pour que l'opération de pliage soit facilitée.

Toutefois, le résultat après pliage n'est pas entièrement satisfaisant : les dents sont souvent vrillées. En outre, si l'on augmente le nombre de rondelles pour moduler les caractéristiques de frottement, la dimension axiale des dents est allongée rendant encore plus probable le vrillage.

La présente invention a pour but notamment de pallier cet inconvénient.

Elle propose un dispositif amortisseur de torsion, notamment un double volant amortisseur pour véhicule automobile, comportant deux masses coaxiales montées mobiles l'une par rapport à l'autre à l'encontre de moyens élastiques et de moyens de frottement, une pièce porteuse étant ménagée entre lesdites masses, solidaire de l'une desdites masses, et recevant un empilage de rondelles appartenant aux moyens de frottement, ladite pièce porteuse comportant un rebord en peigne avec des dents repliées de manière à maintenir l'empilage de rondelles de frottement en place. Un tel dispositif est connu de WO95/28578 formant un état de la technique selon l'article 54(3),(4) CBE quant aux états désignés DE et IT. Un tel dispositif est aussi connu de AU-B-554 758 publié avant la date de priorité de la demande présente. L'invention se distingue d'un tel dispositif par le fait que chaque dent est encadrée par des pattes latérales dites de stabilisation permettant d'aider l'opération de pliage des dents par une matrice d'outils.

Grâce à la présence des pattes latérales, le pliage de chaque dent est encadré, donc stabilisé, et s'effectue sans vrillage. En outre on peut maintenant, sans risquer de vrillage, allonger les dents pour augmenter l'épaisseur du paquet de rondelles, ceci par exemple dans le but d'installer deux ou plusieurs rondelles de frottement à débattements différents et ainsi mieux maîtriser les caractéristiques d'amortissement.

L'invention sera mieux comprise à la lumière de la description qui va suivre d'un exemple de réalisation, description faite, en référence aux dessins annexés sur lesquels :
- la figure 1 est une vue en coupe de face, avec un arrachement local, d'un double volant amortisseur avec un dispositif selon l'invention, et ce selon la ligne I-I de la figure 2 ;
- la figure 2 est une vue en coupe axiale selon la ligne II-II de la figure 1 ;
- la figure 3 est une vue partielle en perspective de la pièce porteuse montrée sur les figures 1 et 2 ;
- la figure 4 est une vue en perspective montrant les moyens de frottement installés dans la pièce porteuse ;
- la figure 5 est une vue en coupe selon la ligne V-V de la figure 4 ; et
- la figure 6 est une vue montrant en éclaté des éléments des figures 4 et 5.

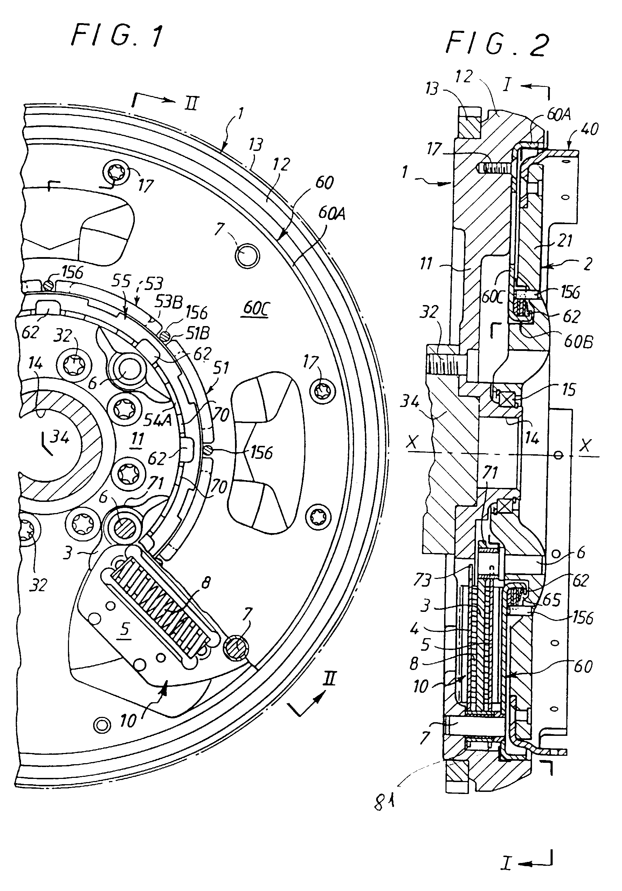

Sur les figures 1 et 2 est illustré un double volant amortisseur pour véhicule automobile comportant deux masses coaxiales 1 et 2 montées mobiles l'une par rapport à l'autre à l'encontre de moyens élastiques à action radiale et de moyens de frottement à action axiale. Ces moyens élastiques et de frottement seront décrits plus loin en détail. Les deux masses 1 et 2 tournent l'une par rapport à l'autre autour de l'axe de symétrie axial X-X. La première masse 1 comporte, ici d'un seul tenant, un plateau 11 et un moyeu central tubulaire 14 autour duquel est monté en rotation la masse 2.

La seconde masse 2 comporte également un plateau 21 s'étendant parallèlement au plateau 11.

Un palier, ici un roulement à billes 15, en variante un palier lisse, est interposé entre la périphérie externe du moyeu 14 et la périphérie interne du plateau 21.

Le plateau 21 de la seconde masse 2 constitue le plateau de réaction d'un embrayage à friction comportant, de manière connue en soi et non représentés ici, un plateau de pression, un diaphragme, un couvercle et un disque de friction.

A la périphérie du plateau de réaction 21 est fixé par rivetage une pièce annulaire 40 servant de manière connue en soi à la fixation du couvercle de l'embrayage (non représenté).

La première masse tournante 1 est reliée par des vis 32 par la périphérie interne de son plateau 11 à un arbre menant 34, par exemple le vilebrequin d'un moteur à combustion interne du véhicule automobile, tandis que la seconde masse tournante 2 est liée en rotation par l'intermédiaire du mécanisme d'embrayage et du disque de friction (non représentés) à un arbre mené, celui d'entrée de la boîte de vitesses du véhicule.

Le plateau 11 de la première masse 1 se prolonge d'un seul tenant à sa périphérie externe par une jupe cylindrique d'orientation axiale 12.

La masse 1 porte à sa périphérie externe une couronne de démarrage 13 destinée à être entraînée par le pignon d'un démarreur (non représenté).

Les moyens élastiques d'amortissement comportent des organes élastiques 8 constitués ici de ressorts à boudins. Ils interviennent globalement radialement entre les plateaux 11 et 21 et sont montés dans des cassettes articulées 10 comportant de manière connue en soi, un voile 3 doté de logements pour le montage parallèlement de deux ressorts 8 et, d'autre part, deux rondelles de guidage 4 et 5 disposées de part et d'autre du voile 3 et présentant également des logements en regard du logement du voile 3 pour le montage desdits ressorts 8. Ici les logements consistent en des fenêtres.

Les rondelles de guidage 4, 5 sont fixées latéralement par rivetage l'une à l'autre. Le voile 3 et les rondelles de guidage 4,5 sont montés tête-bêche, le voile 3 présentant à sa périphérie interne une extension 71 pour le montage d'un axe d'articulation 6 sur la masse 2 (voir figure 1) tandis que les rondelles de guidage 4 et 5 présentent à leur périphérie externe respective également une extension 81 en regard de l'une de l'autre, pour le montage d'un axe d'articulation 7 sur la masse 1.

Une pièce 60 dite porteuse est ménagée entre les masses 1 et 2 (voir figure 2) et est fixée à la périphérie externe du plateau 11, ici à l'aide de vis 17, en variante par rivetage. Elle recouvre et rigidifie le plateau 11.

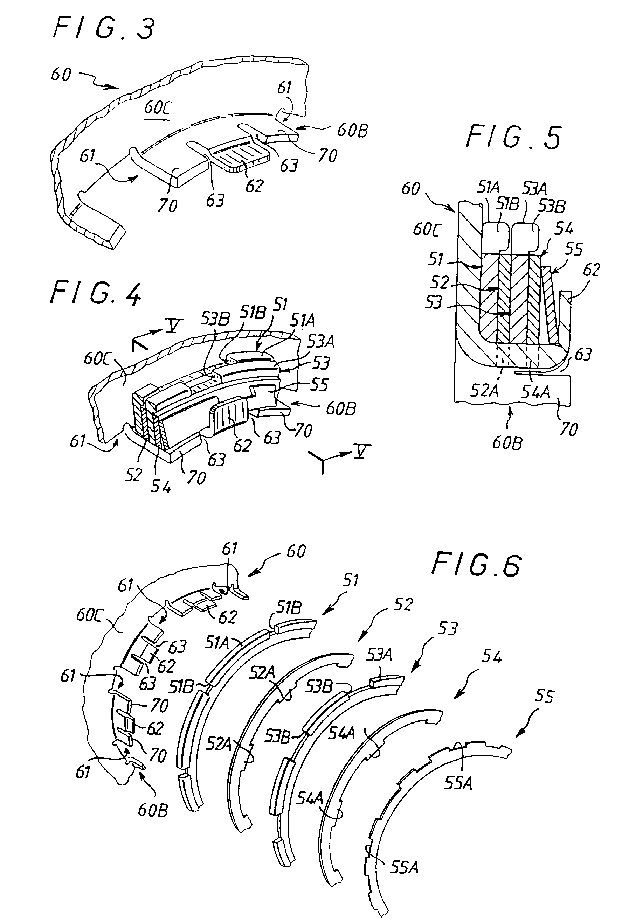

La pièce porteuse 60, ici métallique, par exemple en tôle emboutie, présente à sa périphérie externe un rebord d'orientation axiale 60A épousant la forme de la jupe 12 de la masse 1. A sa périphérie interne, elle présente également un rebord 60B de même orientation axiale qui vient se loger dans un évidement 25 de la masse 2 ménagé à cet effet. Comme on le voit mieux à la figure 6, le rebord 60B est ménagé avec des échancrures 61 formant des mortaises et avec des dents 62 le prolongeant en sens axial. Les dents 62 initialement dans l'alignement du rebord 60B sont destinées en fait à être rabattues radialement par rapport à l'axe X-X, ici radialement en direction opposée à l'axe de l'ensemble (comme cela est représenté par exemple sur les figures 4 et 5).

Le rebord 60B avec ses dents 62 est destiné au logement des moyens de frottement. Entre le fond 60C de la partie transversale de la pièce porteuse 60 et les dents 62, on trouve successivement axialement une première rondelle rotative de frottement 51, une première rondelle d'application avec engrènement sans jeu 52, une deuxième rondelle rotative de frottement 53, une deuxième rondelle d'application avec engrènement sans jeu 54 et une rondelle Belleville 55, en variante une rondelle élastique ondulée, prenant appui directement sur les dents 62 pour exercer une force axiale sur le paquet de rondelles.

Les rondelles 52 et 54 présentent à leur périphérie interne des pattes 52A et 54A formant des tenons engagés dans les mortaises 61 de la pièce porteuse 60 (voir figures 5 et 6).Elles sont ainsi immobilisées en rotation par rapport à la masse 1.

Les rondelles rotatives de frottement 51 et 53 présentent à leur périphérie externe des zones de renfort en forme de surépaisseurs respectivement 51A, 53A avec des échancrures respectivement 51B et 53B propres à coopérer avec jeu avec des pions 156 portés par la masse 2 radialement à l'intérieur de la zone annulaire du plateau de réaction 21 destinée à coopérer avec le disque de friction (non représenté) de l'embrayage. Les renforts s'étendent autour des rondelles 52 et 54 intercalées comme on le voit mieux sur la figure 5.

Comme on le voit bien sur les figures 4 et 6 les échancrures 51B de la première rondelle de frottement sont de largeur plus grande circonférentiellement que les échancrures 53B de la seconde rondelle de frottement réalisant ainsi un dispositif d'hystérésis à deux étages. Les rondelles de frottement 51 et 53 sont en d'autres termes engrenées avec des jeux de débattements différents avec les pions 156 de la masse 2. Avantageusement les rondelles 51, 53 sont en matière synthétique.

La rondelle Belleville 55 présente également des échancrures 55A délimitant les zones de contact et d'application de force sur la rondelle d'application adjacente 54. On notera que la pièce porteuse 60 porte en majeure partie les moyens de frottement, seuls les pions 156 sont portés par la deuxième masse 2.

A la figure 3, on a représenté partiellement la pièce porteuse 60 avant la mise en place de l'empilage de rondelles et avant pliage des dents 62. Comme on le voit bien sur cette figure, le rebord 60B présente une structure en peigne avec une alternance d'échancrures 61 (les mortaises 61 précitées) et de dents 62 bordées de pattes de stabilisation 70.

Les dents 62 sont amincies par rapport au rebord 60B de la pièce 60. Des entailles 63 ménagées de part et d'autre des dents 62, permettent de faciliter l'opération de pliage.

Selon l'invention, pour aider encore le pliage des dents 62, on a ménagé deux pattes dites de stabilisation 70, de part et d'autre de chaque dent 62, définies d'un côté par une entaille 63 et de l'autre par l'échancrure 61. Ces pattes constituent pour l'outillage (non représenté) des moyens d'appui permettant de maîtriser par un guidage solide le pliage des dents 62.

Cette opération de pliage pourra s'effectuer de manière en soi connue : la pièce porteuse étant posée sur une table, une matrice d'outils interviendra en refoulant d'abord le Belleville de manière à dégager les pattes latérales pour l'appui d'éléments de guidage pour les outils de pliage des dents.

Il va de soi que des variantes de réalisation sont possibles, notamment l'empilage de rondelles pourrait être ménagé non plus contre le rebord interne 60B de la pièce porteuse 60 mais contre le rebord radialement externe 60A (voir figure 2). Les pions 156 peuvent être remplacés par des saillies axiales du plateau 21.

Au lieu d'être ménagé entre les deux masses d'un double volant amortisseur, l'agencement selon l'invention pourrait être ménagé entre le moyeu et l'une des rondelles de guidage d'un disque de friction comportant deux rondelles de guidage accouplées de manière élastique au moyeu. La rondelle porteuse peut être solidaire de l'une des rondelles de guidage et le moyeu peut présenter des saillies engrenant avec les rondelles de frottement, ou dans tout autres dispositifs rotatifs amortisseur de vibration de torsion. Ainsi les ressorts 8 peuvent intervenir circonférentiellement.

Pour mémoire on rappellera qu'en fonctionnement les cassettes articulées 10 s'inclinent et que les ressorts 8 sont comprimés. Dans une première étape la rondelle 53 intervient et frotte sur les rondelles 54,52 car elle est entraînée (après rattrapage du jeu entre les pions 156 et les échancrures 53B) par la seconde masse 2. Dans une étape ultérieure, la rondelle 51 intervient et frotte sur la pièce 60 et la rondelle 52 après rattrapage du jeu entre les échancrures 51B et les pions 156.

## Revendications

1. Dispositif amortisseur de torsion, notamment un double volant amortisseur pour véhicule automobile, comportant deux masses coaxiales (1,2) montées mobiles l'une par rapport à l'autre à l'encontre de moyens élastiques (8) et de moyens de frottement (51-55), une pièce porteuse (60) étant ménagée entre lesdites masses (1,2), solidaire de l'une desdites masses (1), et recevant un empilage de rondelles (51 à 55) appartenant aux moyens de frottement, ladite pièce porteuse comportant un rebord en peigne (60B) avec des dents (62) repliées de manière à maintenir ledit empilage de rondelles en place, caractérisé en ce que chaque dent (62) est encadrée par des pattes latérales dites de stabilisation (70) permettant d'aider l'opération de pliage des dents (62) par une matrice d'outils.

2. Dispositif selon la revendication 1, caractérisé en ce que ledit rebord (60B) de la pièce porteuse présente une structure en peigne annulaire avec une alternance d'échancrures (61) et de dents (62) bordées de pattes de stabilisation (70).

3. Dispositif selon la revendication 1, caractérisé en ce que lesdites pattes de stabilisation (70) sont ménagées dans ledit rebord (60B) de la pièce porteuse (60), chaque patte (70) étant définie d'une part par une des échancrures (61) et, d'autre part, par une découpe (63) ménagée dans le prolongement de la dent (62).

4. Dispositif selon la revendication 1, caractérisé en ce que lesdits moyens de frottement comprennent une rondelle rotative de frottement (51) engrenée à jeu avec des pions (156) solidaires de l'une desdites masses (2), une rondelle avec engrènement sans jeu (52) par l'autre masse (1) par l'intermédiaire de tenons (52A) engagés sans jeu dans lesdites échancrures (61) de la pièce porteuse (60) et une rondelle Belleville (55) adaptée à exercer une force axiale sur ces rondelles (51,52).

5. Dispositif selon la revendication 4, caractérisé par deux rondelles de frottement (51,53) et deux rondelles avec engrènement sans jeu (52,54), les deux rondelles de frottement (51,53) étant engrenées avec des débattements différents de pions (156) de manière à réaliser deux étages d'hystérésis.

6. Dispositif selon la revendication 5, caractérisé en ce que la rondelle de frottement (53) la plus proche des dents (62) présente des échancrures (53B) de plus petite largeur circonférentiellement que des échancrures ménagées sur la rondelle de frottement (51) proche du fond (60C) de la pièce porteuse (60).

7. Dispositif selon la revendication 4, caractérisé en ce que lesdites rondelles de frottement (51, 53) présentent à leur périphérie externe un renfort (51A, 53A) s'étendant autour des rondelles à engrènement sans jeu (52, 54).

8. Dispositif selon la revendication 1, caractérisé en ce que les dents (62) sont amincies par rapport au rebord (60B) de la pièce porteuse (60).

## Patentansprüche

1. Drehschwingungsdämpfervorrichtung, insbesondere ein Zweimassen-Dämpfungsschwungrad für Kraftfahrzeuge, umfassend zwei koaxiale Massen (1, 2), die im Verhältnis zueinander beweglich entgegen elastischen Mitteln (8) und Reibungsmitteln (51-55) gelagert sind, wobei ein Trägerelement (60) zwischen den besagten Massen (1, 2), fest mit einer der besagten Massen (1) verbunden, angeordnet ist und ein Scheibenpaket (51 bis 55) aufnimmt, das zu den Reibungsmitteln gehört, wobei das besagte Trägerelement eine kammartige Randleiste (60B) mit Zähnen (62) umfaßt, die so umgebogen sind, daß sie das besagte Scheibenpaket in Position halten, **dadurch gekennzeichnet**, daß jeder Zahn (62) durch als Stabilisierungsansätze bezeichnete seitliche Ansätze (70) eingefaßt ist, durch die der Vorgang zum Biegen der Zähne (62) durch ein Werkzeuggesenk unterstützt werden kann.

2. Vorrichtung nach Anspruch 1, **dadurch gekennzeichnet**, daß die besagte Randleiste (60B) des Trägerelements eine ringförmige kammartige Struktur mit einer wechselnden Abfolge von Aussparungen (61) und Zähnen (62) aufweist, die durch Stabilisierungsansätze (70) eingefaßt sind.

3. Vorrichtung nach Anspruch 1, **dadurch gekennzeichnet**, daß die besagten Stabilisierungsansätze (70) in die besagte Randleiste (60B) des Trägerelements (60) eingearbeitet sind, wobei jeder Ansatz (70) einerseits durch eine der Aussparungen (61) und andererseits durch einen Einschnitt (63) definiert ist, der in die Verlängerung des Zahns (62) eingearbeitet ist.

4. Vorrichtung nach Anspruch 1, **dadurch gekennzeichnet,** daß die besagten Reibungsmittel eine drehbare Reibscheibe (51), die mit Spiel mit Stiften (156) in Eingriff kommt, die fest an einer der besagten Massen (2) angebracht sind, eine Scheibe mit spielfreiem Eingriff (52), die an der anderen Masse (1) über spielfrei in die besagten Aussparungen (61) des Trägerelements (60) eingesetzte Zapfen (52A) angebracht ist, und eine Tellerfeder (55) umfassen, die eine axiale Kraft auf die Scheiben (51, 52) ausüben kann.

5. Vorrichtung nach Anspruch 4, **gekennzeichnet** durch zwei Reibscheiben (51, 53) und zwei Scheiben mit spielfreiem Eingriff (52, 54), wobei die zwei Reibscheiben (51, 53) mit unterschiedlichen Auslenkungen mit Stiften (156) in Eingriff kommen, um zwei Hysteresestufen auszuführen.

6. Vorrichtung nach Anspruch 5, **dadurch gekennzeichnet**, daß die den Zähnen (62) am nächsten liegende Reibscheibe (53) Aussparungen (53B) mit kleinerer Umfangsbreite als die Aussparungen aufweist, die an der Reibscheibe (51) in der Nähe des Bodens (60C) des Trägerelements (60) vorgesehen sind.

7. Vorrichtung nach Anspruch 4, **dadurch gekennzeichnet**, daß die besagten Reibscheiben (51, 53) an ihrem äußeren Rand eine Verstärkung (51A, 53A) aufweisen, die sich um die Scheiben mit spielfreiem Eingriff (52, 54) herum erstreckt.

8. Vorrichtung nach Anspruch 1, **dadurch gekennzeichnet,** daß die Zähne (62) im Verhältnis zur Randleiste (60B) des Trägerlements (60) dünner ausgeführt sind.

## Claims

1. Torsion damping device, notably a double damping flywheel for a motor vehicle, having two coaxial masses (1, 2) mounted so as to be able to move with respect to each other counter to elastic means (8) and friction means (51-55), a carrier piece (60) being provided between the said masses (1, 2), fixed to one of the said masses (1), and receiving a stack of washers (51 to 55) forming part of the friction means, the said carrier piece having a comb-shaped flange (60B) with teeth (62) folded so as to hold the said stack of washers in place, characterised in that each tooth (62) is flanked by so-called stabilisation lateral lugs (70) for assisting the operation of holding the teeth (62) by means of a tool die.

2. Device according to Claim 1, characterised in that the said flange (60B) on the carrier piece has an annular comb structure with an alternation of scallops (61) and teeth (62) bordered by stabilisation lugs (70).

3. Device according to Claim 1, characterised in that the said stabilisation lugs (70) are provided in the said flange (60B) of the carrier piece (60), each lug (70) being defined on the one hand by one of the scallops (61) and on the other hand by a cut-out (63) provided in line with the tooth (62).

4. Device according to Claim 1, characterised in that the said friction means comprise a rotary friction washer (51) meshed with clearance with pins (156) fixed to one of the said masses (2), a washer with meshing without clearance (52) by the other mass (1) by means of tenons (52A) engaged without clearance in the said scallops (61) in the carrier piece (60) and a Belleville washer (55) adapted to exert an axial force on these washers (51, 52).

5. Device according to Claim 4, characterised by two friction washers (51, 53) and two washers with meshing without clearance (52, 54), the two friction washers (51, 53) being meshed with different clearance movements of pins (156) so as to produce two hysteresis stages.

6. Device according to Claim 5, characterised in that the friction washer (53) closest to the teeth (62) has scallops (53B) with a smaller width circumferentially than scallops provided on the friction washer (51) close to the base (60C) of the carrier piece (60).

7. Device according to Claim 4, characterised in that the said friction washers (51, 53) have, at their external periphery, a reinforcement (51A, 53A) extending around the washers meshing without clearance (52, 54).

8. Device according to Claim 1, characterised in that the teeth (62) are thin compared with the flange (60B) on the carrier piece (60).
